# EUROPÄISCHE PATENTANMELDUNG

(11) **EP 1 109 370 A2**
(43) Veröffentlichungstag der Anmeldung: **20.06.2001**
(21) Anmeldenummer: 00125448.1
(22) Anmeldetag: 20.11.2000
(51) Int. Cl.: H04L 29/06, G06F 1/00

(54) **Vorrichtung and Verfahren zum individuellen Filtern von über ein Netzwerk übertragener Informationen**

(30) Priorität: 04.12.1999 DE 19958638; 28.09.2000 DE 10048113
(71) Anmelder: Nutzwerk Informationsgesellschaft mbH, 06112 Halle (DE)
(72) Erfinder: Wonneberger, Ramona, 06116 Halle (DE); Holzer, René, Dipl.-Ing., 06217 Merseburg (DE)
(74) Vertreter: Kewitz, Ansgar

(57) **Zusammenfassung**

Vorrichtung und Verfahren zum individuellen Filtern von über ein Netzwerk übertragener Informationen in Form von Anfragen und Antworten, die an ein Nutzergerät gerichtet sind, mit Nutzerprofilen, wobei in einem ersten Schritt eine Netzwerkadresse des Nutzergeräts dem Nutzerprofil anhand der zumindest einmalige übertragenen Nutzeridentifikationsdaten zugeordnet wird, und in einem weiteren Schritt die vom Nutzergerät angeforderten und gesendeten Informationen anhand der im Nutzerprofil gespeicherten Kriterien gefiltert werden. Die Kriterien werden durch Regeln bestimmt, die Mengen von Anfragen und Antworten definieren, die nicht weitergeleitet werden, wobei diese Menge durch bekannte Mengenoperatoren verknüpft werden können. Die Regeln werden durch in den Informationen enthaltene Wörter, durch Domain-Namen, durch die Verweilzeit im Internet und/oder durch die Größe oder die Art der Informationen bestimmt.

## Beschreibung

Die Erfindung betrifft Vorrichtungen und Verfahren zum individuellen Filtern von über ein Netzwerk übertragener Informationen, die an ein Nutzergerät gerichtet sind.

Aufgrund des starken Wachstums des Internet und seines unstrukturierten, unkontrollierbaren Aufbaus findet man dort eine Reihe von Informationen, die bestimmten Berufsgruppen oder Personengruppen nicht zugänglich sein sollten. Insbesondere Kinder sollten keinen Zugang zu Themen wie Gewalt haben. Auch in Unternehmen besteht ein Bedarf den Zugang zum Internet zu kontrollieren und nur Informationen bereitzustellen, die der Erfüllung der Aufgabe des Arbeitnehmers dienen können. Die primären Dienste, die kontrolliert werden sollen, sind WWW, Email und FTP. Bekannte Netzwerkfilter, wie sie von CyberPatrol und NetNanny angeboten werden, sind lediglich statischer Natur. Es ist mit ihnen nicht möglich eine nutzerspezifische Filterung von Informationen vorzunehmen. Vielmehr weisen sie eine Datenbank auf, in der alle Seiten gespeichert sind, auf die ein Zugriff nicht zu erfolgen hat bzw. auf die zugegriffen werden kann. Diese Eigenschaft ermöglicht es lediglich diese bekannten Filter in großen Firmennetzwerken einzusetzen, bei denen die Filteranforderungen für eine große Nutzerzahl identisch sind. Eine Verwendung bei Internet-Providern, die eine Vielzahl von unterschiedlichen Nutzern aufweisen, die unterschiedliche Anforderung an die Filterung der Informationen haben, ist hiermit nicht möglich.

Aus EP 0762707 ist ein Filter bekannt, der anhand der IP-Adressen eine Filterung vornimmt. Im Gegensatz zu der vorliegenden Erfindung ist die Erfindung aus dieser Druckschrift nicht in der Lage, den Inhalt der übertragenen Daten zu analysieren.

Aus der EP 0957 618 ist ein Filter zu entnehmen, der zusätzlich zu den IP-Adressen den Inhalt der Informationen überprüft. Die Liste der Wörter bildet jedoch lediglich eine Ausschlussliste.

Aus der WO 98/41913 ist eine Vorrichtung und ein Verfahren bekannt, die sowohl die IP-Adressen von bestimmten Internet Sites blockieren als auch eine Liste von Wörtern berücksichtigten, die nicht in den übertragenen Informationen enthalten sein dürfen.

Aus der US 5996 011 Druckschrift ist eine Vorrichtung und ein Verfahren bekannt, die sowohl die IP-Adressen von bestimmten Internet Sites blockieren als auch eine Liste von Wörtern berücksichtigten, die nicht in den übertragenen Informationen enthalten sein dürfen. Ferner werden sowohl positive Listen als auch negative Listen geführt, die nacheinander überprüft werden. Falls ein Begriff nicht in einer positiven Liste enthalten ist, so wird die negative Liste überprüft.

Die WO 99/48261 zeigt eine Firewall, die eine Filterung auf der Basis der IP-Adressen und der Portadressen vornimmt, jedoch keine inhaltsbezogenen Analysen durchführt.

Die WO 99/54827 offenbart eine Firewall und einen Proxy, der ausschließlich auf der Basis von IP-Adressen eine Analyse der Internetdaten vornimmt. Eine Überprüfung des Inhalts der Internetdaten erfolgt nicht.

Aufgabe der vorliegenden Erfindung ist es, einen Netzwerkfilter bereitzustellen, der unterschiedliche Filterprofile verwaltet, die einem Nutzer individuellen zugeordnet werden können und deren Regeln je nach Bedarf angepaßt werden können.

Gelöst wird diese Aufgabe durch Vorrichtungen und Verfahren mit den Merkmalen der unabhängigen Ansprüche, insbesondere durch eine Vorrichtung zum individuellen Filtern von über ein Netzwerk übertragener Informationen, die an ein Nutzergerät gerichtet sind. Diese Vorrichtung hat mindestens einen Nutzerprofilspeicher, in dem nutzerspezifische Filterprofile abgelegt sind. Weiterhin hat sie mindestens ein Eingabegerät, das die zu filternden Informationen aus dem Netzwerk empfängt, und mindestens ein Ausgabegerät, das die gefilterten Informationen zum Nutzergerät sendet. Weiterhin hat die Vorrichtung eine Bearbeitungseinheit, die eine Netzwerkadresse des Nutzergeräts anhand der zumindest einmalig übertragenen Nutzeridentifikationsdaten dem nutzerspezifischen Filterprofil zuordnet und die im folgenden anhand des Filterprofils die Informationen aus dem Netzwerk, die unmittelbar oder mittelbar an die entsprechenden Netzwerkadresse adressiert sind, nach den Kriterien des Filterprofils filtert.

Der vorliegende Filter arbeitet vorzugsweise inhaltsbezogen. Hierbei wird der binäre Datenstrom analysiert, um ihm konkrete Inhalten zuzuordnen. So ist es z.B. möglich direkt aus dem Datenstrom zu erkennen, ob ein Text, ein Bild oder eine Binäre-Datei auszuwerten ist. Nach der Decodierung des Datenstromes werden bestimmte Regelsätze zugeordnet. Wird z.B. eine Datei gesendet, so greift das Regelwerk für Dateien, wird hingegen ein Bild transferiert, so wird Überprüft, ob es sich z.B. um einen Werbebanner handelt.

Die Auswertung der Binärdaten kann wiederum verschachtelt auch auf Unterformen erfolgen. So kann bei speziellen Dateien ein Virenscanner aktiviert werden. Kommt hingen eine Bilddatei, so wird durch Logiken, Bilderkennungsalgorithmen, Vergleiche oder OCR- Software eine Untersuchung durchgeführt. Durch die OCR-Software kann überprüft werden, ob ein spezieller Text vorhanden ist.

Weiterhin werden die Größe, die Anordnung und das Verzeichnis der Speicherung berücksichtigt. Im einfachsten Fall ist ein Werbebanner durch die Grösse des Bildes, durch den Ort der Lagerung und die Form der Verknüpfung bestimmt.

Weiterhin können Zusatzinformationen wie Plug-Ins herausgefiltert werden, die einem Browser eine besondere Funktionalität verleihen. Für diesen Fall wird ebenfalls der Datenstrom decodiert. Der Datenstrom wird inhaltsbezogen gefiltert, wobei aufgrund eines entsprechenden Regelsatzes reagiert wird. Wird z.B. in die Antwort des Web-Servers zum Benutzer ein Cookie (Zusatzinformation) eingefügt, wird durch die Analyse des Filters der Datenstrom vom Cookie befreit, wenn der Benutzer dies in seinem Regelsatz definiert hat.

Manche Web-Server verlangen zur Darstellung eines bestimmten Inhaltes ein Zusatzprogramm (z.B. Plug-In). Das Laden des Zusatzprogramms wird durch den Filter überwacht, wobei der Inhalt analysiert wird. So kann verhindert werden, dass Viren oder trojanische Pferde in Zusatzprogrammen, die z.B. der Browser verwendet, auf der Festplatte des Nutzers automatisch abgelegt und ausgeführt werden.

Die Verknüpfungen der Inhalte und Regeln beschränkt sich nicht nur auf logische Operatoren wie AND/OR/NOT. Es wird weiterhin der Datenstrom mit regulären Ausdrücken ausgewertet, wobei diese dazu dienen, eine große Menge an Worten durch eine einfache Syntax abzudecken. Reguläre Ausdrücke dienen zur Beschreibung beliebiger Zeichenketten. Das folgende Beispiel soll illustrieren, wie eine mögliche Definition aussieht.

Reguläre Ausdrücke stellen ein Konstruktionsverfahren für Sprachen dar. Der Zusammenhang von regulären Ausdrücken und Sprachen wird durch Definitionen beschrieben.

Ein regulärer Ausdruck ist somit ein syntaktisches Konstrukt, das eine Sprache bezeichnet. Keinesfalls dürfen der Ausdruck und die durch ihn bezeichnete Sprache verwechselt werden. Die Stärke der Bindung ist durch die Reihenfolge "Iteration", "Konkatenation", "Vereinigung" gegeben.

### Beispiel:

Ein URL (Uniform Resource Locator) gibt die Adresse eines Objekts im World Wide Web an. Er besteht aus der Zugriffsart (http, ftp, gopher, mailto, news) gefolgt von einem Doppelpunkt ":" und einer genaueren Beschreibung des Objekts, abhängig von der Zugriffsart.

Bei http, ftp und gopher folgen zwei Schrägstriche "//", ein Hostname und ein Zugriffspfad.

Ein Hostname besteht entweder aus vier Zahlen mit maximal drei Ziffern, getrennt durch einen Punkt (z.B. 128.130.173.8) oder aus einer beliebigen Anzahl von Buchstabengruppen (Groß- und Kleinbuchstaben und "-") getrennt durch einen Punkt (der Hostname muss in diesem Fall mit einem Buchstaben beginnen, z.B. ftp.uni-paderborn.de).

Ein Zugriffspfad ist vom Hostname durch einen Schrägstrich getrennt. Er besteht aus beliebig vielen (nicht leeren) Filenamen, die durch Schrägstriche getrennt sind und darf auch mit einem Schrägstrich enden.

Ein Filename besteht aus beliebig vielen Groß- und Kleinbuchstaben, "-" und ".".

Bei der Zugriffsart news folgt nach dem Doppelpunkt nur ein Hostname. Bei mailto folgt nach dem Doppelpunkt ein Name, ein "@" und ein Hostname. Ein Name besteht aus beliebig vielen Groß- und Kleinbuchstaben.

### Lösung:

ziff = [0-9]
zahl = ziff ziff? ziff?
bst = [a-z]|[A-Z]
ip = zahl "." zahl "." zahl "." zahl
hn = bst (bst|"-")^{∗} ("." (bst|"-") +)^{∗}
host = ip | hn
file = (bst|"-"|".") +
pfad = file ("/" file)^{∗} "/"?
art = "http"|"ftp"|"gopher"
URL = (art "://" host ("/" pfad)|("/"?)) | ("news:" host) | ("mailto:" bst+ "@" host)

Eine Zahl besteht also aus maximal drei Ziffern. Da die vier Zahlen ihrerseits durch einen Punkt getrennt sind, bedeutet das, daß eine Zahl aus mindestens einer Ziffer bestehen muß. Eine Trennung hätte sonst keinen Sinn. Daraus ergeben sich die Definitionen ziff = [0-9] und zahl = ziff ziff? ziff?. Eine Zahl besteht also aus einer Ziffer gefolgt von zwei optionalen Ziffern. Über den Wertebereich einer Zahl wird keine Aussage gemacht. Das "Metawissen", dass eine IP-Adresse (derzeit) nur mit Zahlen im Bereich von 0 bis 255 arbeitet ist hier ohne Belang. Die gesamte IP-Adresse ist eine Aneinanderreihung von Zahlen, getrennt durch einen Punkt: ip = zahl "." zahl "." zahl "." zahl

Die zweite Alternative für den Hostname ist ein Name bestehend aus Buchstabengruppen die durch Punkte getrennt sind. Die Buchstabengruppen dürfen zwar auch einen Bindestrich enthalten, der ganze Hostname muss jedoch mit einem Buchstaben beginnen. Wir definieren daher zuerst einen Einzelbuchstaben durch bst = [a-z]|[A-Z]. Der ganze Name hn beginnt also mit einem bst und erst dann dürfen Buchstaben und Bindestriche in beliebiger Kombination vorkommen: (bst|"-")^{∗}. Weitere Buchstabengruppen sind durch Punkt get
rennt: ("." (bst|"-") +)^{∗}

Der ganze Hostname ist durch host = ip|hn definiert.

Die Zugriffsarten news und mailto lassen sich mit den vorangegangenen Bausteinen direkt aus der Textbeschreibung ableiten:
Bei der Zugriffsart news folgt nach dem Doppelpunkt nur ein Hostname. Bei mailto folgt nach dem Doppelpunkt ein Name, ein "@" und ein Hostname. Ein Name besteht aus beliebig vielen Groß- und Kleinbuchstaben.
Daraus ergeben sich "news:" host bzw. "mailto:" bst^{∗} "@" host
Ein Zugriffspfad ist vom Hostname durch einen Schrägstrich getrennt. Er besteht aus beliebig vielen (nicht leeren) Filenamen, die durch Schrägstriche getrennt sind, wobei er auch mit einem Schrägstrich enden darf.

Die Filenamen bestehen aus beliebig vielen Buchstaben, "-" und ".", sind aber nicht leer also file = (bst|"-"|".")+. Der ganze Zugriffspfad besteht jedoch aus beliebig vielen, durch "/" getrennten Filenamen und darf mit einem "/" enden. D.h., der ganze Pfad kann auch leer sein. Daraus ergibt sich pfad = file ("/" file)^{∗} "/"?

Beim Zusammensetzen der vollständigen Definition müssen jetzt noch einige Ungereimtheit beseitigt werden.

Ein Zugriffspfad ist vom Hostname durch einen Schrägstrich getrennt.

Der Zugriffspfad kann auch leer sein. Eine Trennung von etwas Leerem macht jedoch keinen Sinn. Gleichzeitig darf der Pfad nur mit einem "/" enden. Eine Definition die beide Fälle berücksichtigt, ist in der Lösung gegeben. Sie lautet: host ("/" pfad)|("/"?) und vermeidet damit zwei Schrägstriche direkt nebeneinander

Dieses Verfahren ist auf jede Form von Texten anzuwenden. Reguläre Ausdrücke lassen sich logisch verbinden. So ist es möglich nach bestimmten Texten zu suchen und zu überprüfen ob diese gewissen Logiken gehorchen bzw. ob bestimmte Texte in definierten Zusammenhängen stehen.

Eines der wichtigsten Unterscheidungsmerkmale zum Stand der Technik ist die Auswertung des eingehenden und des ausgehenden Datenstroms.

Das Netzwerk ist vorzugsweise das Internet, wobei die Vorrichtung zwischen dem Internet und dem Nutzergerät angeordnet ist. Die Vorrichtung kann sowohl logisch als auch physikalisch zwischen dem Nutzergerät und dem Internet angeordnet sein. Das Eingabegerät, das vorzugsweise eine Netzwerkkarte darstellt, ist mit dem Internet verbunden ist, um Informationen aus dem Internet zu empfangen. Über das Ausgabegerät werden die gefilterten Ergebnisse aus dem Internet dann an das Nutzergerät übermittelt. Hierbei ordnet die Bearbeitungseinheit anhand der. übertragenen Nutzeridentifikationsdaten ein nutzerspezifisches Filterprofil der IP-Adresse des Nutzergeräts zu. Die Bearbeitungseinheit filtert im folgenden anhand des Filterprofils die Informationen aus dem Netzwerk, die unmittelbar oder mittelbar an die entsprechende IP-Adresse adressiert sind oder von ihr stammen, nach den Kriterien des Filterprofils.

In einer weiteren vorteilhaften Ausbildung weist die Vorrichtung zusätzlich die Funktionalität eines bekannten Internet-Proxys auf, der eine lokale Socket-Verbindung zum Nutzergerät aufbaut, über die der Informationsaustausch mit dem Internet erfolgt, wobei anhand der zumindest einmaligen übertragenen Nutzeridentifikationsdaten, die in Abhängigkeit zu der IP-Adresse des Nutzergeräts stehen, die Bearbeitungseinheit das nutzerspezifische Filterprofil der IP-Adresse zuordnet. Die Funktionalität eines Internet-Proxys ist maßgeblich dadurch bestimmt, daß die IP-Adressen der Nutzergeräte auf eine einheitliche IP-Adresse abgebildet werden, wobei diese einheitliche IP-Adresse maskierte wird, um eine Rücktransformation zu erlauben. Weiterhin weist der Internet-Proxy eine Cache-Funktion auf, die es erlaubt, bereits abgerufene Informationen schneller bereitzustellen.

Auch ist es möglich das gewünschte Ergebnis mit einem transparenten Internet-Proxy zu erreichen. Ein transparenter Proxy lauscht am Informationsverkehr zwischen den Nutzergeräten und dem Internet. Es ist somit nicht notwendig, daß das Nutzergerät eine lokale IP-Verbindung zum Proxy aufbaut. Bei der Verwendung eines transparenten Proxys ist es jedoch notwendig, daß das NAS (Network-Access-System) bei jeder Einwahl eines neuen Nutzergerätes IP-Adresse und Nutzeridentifikationsdaten an den Informationsfilter selbständig überträgt.

Weiterhin wird die Aufgabe durch ein Verfahren zum individuellen Filtern von über ein Netzwerk übertragener Informationen, die an ein Nutzergerät gerichtet sind, mit Nutzerprofilen gelöst. Nach der Zuordnung der Netzwerkadresse des Nutzergeräts zu einem Nutzerprofil anhand der zumindest einmalige übertragenen Nutzeridentifikationsdaten, werden die vom Nutzergerät angeforderten Informationen anhand der im Nutzerprofil gespeicherten Regeln gefiltert. Durch die Regeln werden Mengen an Informationen definiert, die an das Nutzergerät übertragen. werden dürfen bzw. die nicht übertragen werden dürfen. Die so definierten Mengen können durch bekannte Mengenoperationen verknüpft werden. Diese Mengen können durch in den Informationen enthaltene Wörter, durch Domain-Namen, durch die Verweilzeit im Internet oder durch die Größe der Informationen bestimmt werden.

Weitere vorteilhafte Ausführungsformen sind in den Unteransprüchen aufgeführt. Es folgt eine detaillierte Beschreibung anhand der Zeichnungen. Es zeigt:
- **Figur 1**: die Anordnung des Informationsfilter zwischen dem Internet und den Nutzergeräten, wobei die Nutzergeräte über ein NAS mit dem Internet verbunden sind und die Informationen entweder über den Informationsfilter oder einen bereits vorhanden Proxy geleitet werden;
- **Figur 2**: ein Ablaufdiagramm des Verbindungsaufbaus des Nutzergeräts mit dem NAS, wobei sich das Nutzergeräte einwählt und vom NAS eine IP-Adresse zu gewiesen bekommt, die in Verbindung mit den Nutzeridentifikationsdaten vom Informationsfilter ausgelesen werden kann, weiterhin wird gleichzeitig eine Nutzerstatistik geführt;

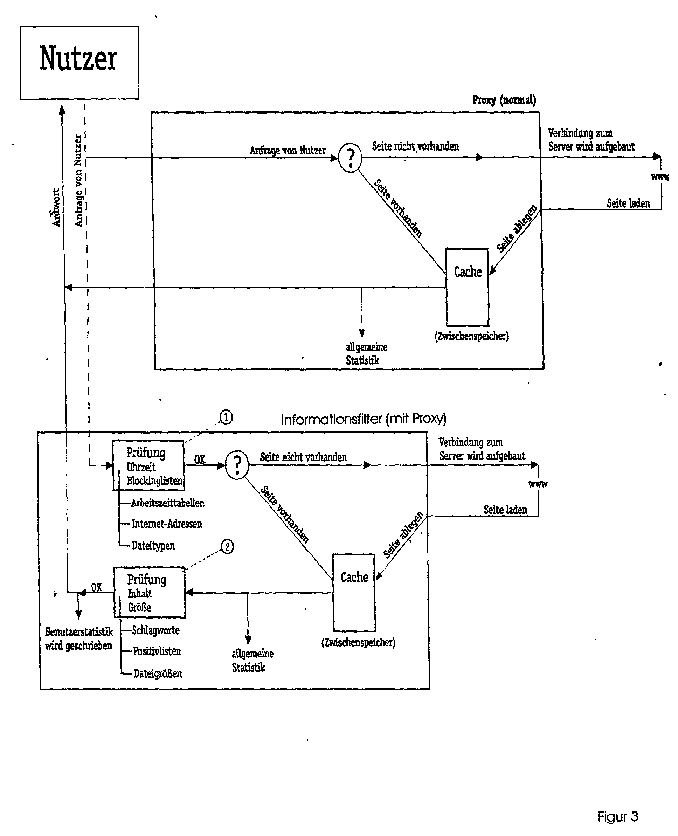

- **Figur 3**: ein Ablaufdiagramm einer Anfrage eines Nutzergeräts, die einmal über einen normalen Proxy geleitet wird und alternativ über einen erfindungsgemäßen Informationsfilter mit der Funktionalität eines Proxys, der anhand der Regeln überprüft, ob eine Anfrage oder die Antwort auf eine Anfrage zulässig ist;
- **Figur 4**: ein Ablaufdiagramm einer Anfrage eines Nutzergeräts, wobei überprüft wird, ob eine Anfrage zu diesem Zeitpunkt gestellt werden darf, ob die Internet Adressen zulässig ist, ob der angefragte Dateitypen zulässig ist und ob persönliche Daten weitergegeben werden;
- **Figur 5**: ein Ablaufdiagramm einer Antwort auf eine Anfrage eines Nutzergeräts, wobei überprüft wird, ob Schlagwörter enthalten sind, die ausgeschlossen sind, ob die Dateigröße überschritten wurde, ob der Domain-Name in der Positivliste enthalten war, wobei Statistiken gespei-chert werden.

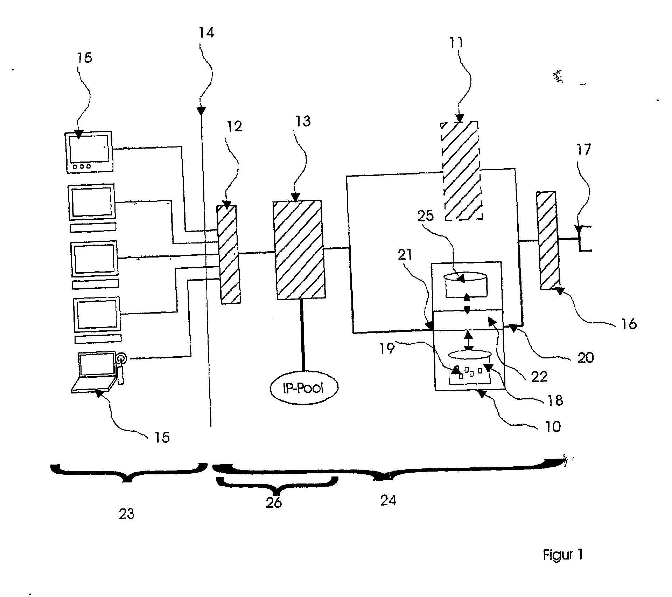

Die Figur 1 zeigt den Informationsfilter 10 in seiner Anordnung bei einem Provider 24, der einen Zugang zum Internet 17 über ein NAS (Network Access System) 26 ermöglicht. Ein Nutzer 23 wählt sich über sein Nutzergerät 15 vorzugsweise mit Hilfe eines Modems beim Provider 24 ein. Andere Formen der Verbindung sind ebenfalls denkbar. So kann eine Einwahl über ein Kabelmodem, über eine Standleitung oder über Funk erfolgen.

Aufgrund der begrenzten Anzahl von IP-Adressen, die den Providern zugeteilt werden, werden diese dynamisch erst dann durch das NAS 26 zugeteilt, wenn sie benötigt werden. Hierzu wird eine Vorrichtung. 13 zum zuweisen von IP-Adressen verwendet, die diese IP-Adressen über ein Modem- oder ISDN-Pool 12, mit denen die Nutzergerätes 15 in Verbindung stehen, an die Nutzergeräte 15 weiterleitet. Das NAS 26 weist weiterhin einen nicht dargestellten Speicherbereich auf, indem die Nutzeridentifikationsdaten abgelegt werden, um bei einer Einwahl überprüfen zu können, ob der jeweilige Nutzer ein Zugangsrecht hat oder nicht. Weiterhin bietet das NAS 26 die Möglichkeit von außen auf die Nutzeridentifikationdaten zuzugreifen die wiederum in Relation zu der zugewiesenen IP-Adresse gespeichert sind, sobald eine Verbindung aufgebaut wird.

Anhand der Nutzeridentifikationsdaten wird ebenfalls der Bereich bzw. die Maske der IP-Adressen festgelegt, so daß ein Routing über einen Router 16 möglich ist. Hierdurch kann bereits zu diesem Zeitpunkt festgelegt werden, ob die Anfragen und Antworten des Nutzergerätes 15 über den Informationsfilter 10 geleitet werden sollen oder direkt ins Internet. Wie der Figur 1 zu entnehmen ist, werden Informationen, die nicht über den Informationsfilter 10 geleitet werden sollen, über einen bereits vorhandenen Proxy 11 geleitet. Alternativ können diese Informationen auch direkt ins Internet, ohne dabei einen Proxy verwenden zu müssen, gesendet werden.

Der Informationsfilter 10 weist ein Eingabegeräte 20 und ein Ausgabegerät 21 auf, die im vorliegenden Beispiel sowohl Einals auch Ausgabefunktionalitäten aufweisen. Das Eingabegeräte 20 steht mit den Nutzergeräten 15 in Verbindung. Das Ausgabegerät 20 steht über den Router 16 mit dem Internet 17 in Verbindung. Weiterhin weist der Informationsfilter 10 eine Bearbeitungseinheit 22 und einen Nutzerprofilspeicher 18 auf. Im Nutzerprofilspeicher 18 sind Filterprofile 19 abgelegt, die ein Regelwerk für Anfragen und Antworten beinhalten.

Zusätzlich umfaßt der Informationsfilter 10, der vorzugsweise die Funktionalität eines Proxys oder eines transparenten Proxys aufweist, einen Cache-Speicher 25 zum Zwischenspeichern von Informationen. Durch den Cache-Speicher 25 kann ein Zugriff auf Informationen im Internet 17 erheblich beschleunigt werden. Falls diese Information bereits zu einem früheren Zeitpunkt angefordert wurden, ist es nun nicht mehr notwendig, diese Informationen erneut aus dem Internet 17 zu laden.

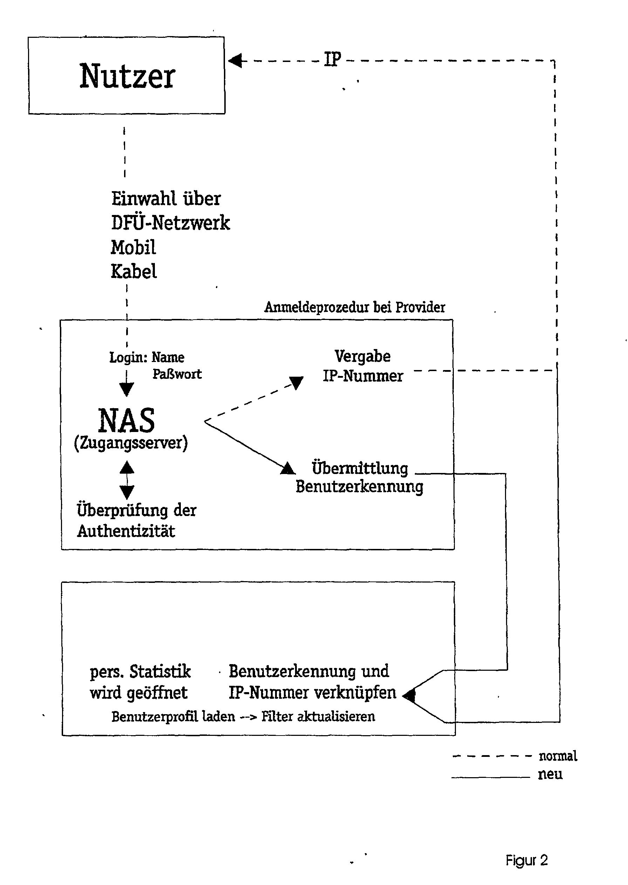

Der Figur 2 ist der Ablauf der Anmeldung eines Nutzergerätes 15 am NAS 26 zu entnehmen. Das Nutzergerätes 15 wählt sich über den Modem- und ISDN-Pool 12 des NAS 26 ein. Hierbei überprüft das NAS 20 die Nutzeridentifikationsdaten, um festzustellen, ob das Nutzergerät 15 Zugang zum Internet 17 erhalten darf. Weiterhin überprüft das NAS 26 anhand der Nutzeridentifikationsdaten welche IP-Adresse aus dem IP-Pool dem Nutzergeräte 15 zugeordnet werden soll. Das NAS 26 übermittelt an das Nutzergerät 15 eine IP-Adresse und trägt diese IP-Adresse in eine interne Router-Tabelle ein, um ankommende Antworten an das richtige Nutzergerät 15 weiterzuleiten. Weiterhin ordnete es die IP-Adresse den Nutzeridentifikationsdaten zu.

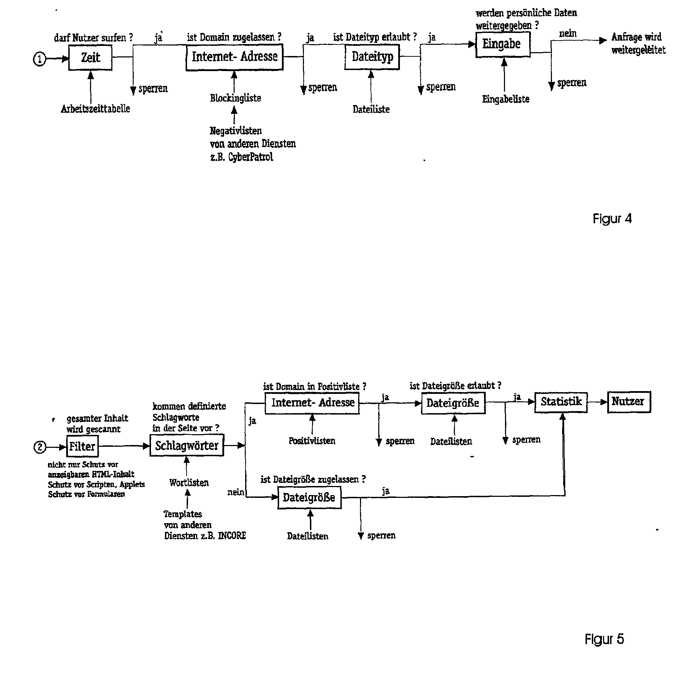

Die Figur 4 zeigt die Bearbeitung einer Anfrage und einer Antwort eines Nutzergerätes 15, wobei unterschiedliche Wege beschritten werden. In der ersten Variante erfolgt die Anfrage über einen Proxy 11, der keinen Filter aufweist. Bei einer Anfrage eines Nutzers wird überprüft, ob diese Anfrage nicht bereits durch die Informationen im Cache-Speicher beantwortet werden kann. Sollte dies der Fall sein, so wird die Antwort aus dem Cache-Speicher gegeben. Ist die Seite nicht vorhanden, so wird eine Verbindung zum Internet aufgebaut und die Seite z. B. von einem WWW-Server geladen.

Bei einer Anfrage, die über den Informationsfilter 10 geroutet wird, erfolgt, bevor die Anfrage weitergeleitet wird, eine Überprüfung anhand des Filterprofile 19, ob diese Art von Datei von dieser Domain bzw. IP-Adresse zu der gegebenen Zeit geladen werden darf. Sollte ein Anfrage erlaubt sein, so wird, wie bereits oben beschrieben, der Cache-Speicher 25 überprüft, ob die Anfrage durch zwischengespeicherte Informationen beantwortet werden kann. Wenn dies nicht der Fall ist, wird die Information aus dem Internet abgerufen. Die so geladenen Information werden im Cache-Speicher 25 zwischengespeichert. Bevor die Antwort an das Nutzergerät weitergeleitet wird, erfolgt eine Überprüfung der Informationen anhand von Schlagworten. Sollte in der Antwort ein ausgeschlossenes Schlagwort gefunden werden, so wird die Antwort zurückgehalten und einer weiteren Überprüfung unterzogen. Diese weitere Überprüfung erfolgt anhand einer Positivliste, in der alle Domain bzw. IP-Adressen aufgeführt sind, deren Informationen die Schlagworte enthalten dürfen. So kann z. B. das Wort "Gewalt" in einem Artikel der Zeitschrift "Spiegel" aufgeführt werden, wohingegen dieses Wort in einem anderem Zusammenhang ausgeschlossen werden soll. Eine Verknüpfung der Schlagworte mit den Einträgen der Positivliste ist individuell möglich. Weiterhin sind alle Profileinträge variabel zu gestalten. Nach der Überprüfung der Positivliste wird die Antwort auch auf ihre Größe überprüft. Sollte die Antwort eine vorgeschriebene Dateigröße überschreiten, so wird die Antwort ebenfalls zurückgehalten.

Weiterhin werde Statistiken über das Verhalten aller Nutzer sowie Nutzerstatistiken für einzelne Nutzer geführt. Die Statistiken enthalten eine Reihe von Informationen. Mögliche Informationen sind die Anzahl von Zugriffen im Monat und am Tag, der Durchschnittswert pro Woche, Tag und Stunde, der Zugriff geordert nach gewählten Domain, z. B. Auswertung pro Land, der Zugriff geordnet nach gewählten Internet-Adressen, die Anzahl und Größe der heruntergeladener Dateien, die z.B. nach Typ und Größe geordnet sind. Die Auswertung kann dabei sowohl tabellarisch als auch graphisch veranschaulicht werde. Weiterhin können Anfragen und Antworten gespeichert werden, deren Zugriff bzw. deren Weiterleitung aufgrund der Regeln unzulässig war. Zusätzlich kann ein Zeitraum bestimmt werden, indem die Informationen gespeichert werden. Dies kann z. B. 12 Monate sein.
Die Figur 4 zeigt einen detaillierten Ablaufplan der Filterung einer Anfrage. So wird zu Beginn überprüft, ob der Nutzer zum gegeben Zeitpunkt im Internet surfen bzw. ob er darauf zugreifen darf. Sollte dies der Fall sein, so wird als nächstes überprüft, ob die IP-Adressen, an die die Anfrage gerichtet ist, in einer Negativliste bzw. Blockingliste aufgeführt ist. Diese Listen können von anderen Dienstanbietern, wie CyberPatrol, online bezogen werden. CyberPatrol ist ein Anbietern der das Internet regelmäßig auf Domains und IP-Adressen überprüft, deren Inhalt dem Anstandsgefühl des gewöhnlichen Nutzers nicht entspricht. Auch kann diese Negativliste manuell erweitert werden. Sollte die IP-Adressen nicht in der Negativliste aufgeführt sein, so wird weiter überprüft, ob der angefragt Dateityp überhaupt abgerufen werden darf. So können z. B. ftp-Aufträge unterbunden werden, durch die ausführbare Dateien geladen werden, die möglicherweise Viren enthalten. Die Dateiliste enthält eine Reihe von Dateitypen, die nicht aus dem Internet geladen werden dürfen.

Zuletzt wird überprüft, ob persönliche Daten weitergeben werden. Dies kann z. B. der Fall sein, wenn in Emails Passwörter übertragen werden. Ferner kann verhindern werden, daß bestimmte Dateitypen vom Nutzer versandt werden. Hierdurch wird sichergestellt, daß keine unternehmenswichtigen Daten in das Internet gelangen.

Figur 5 zeigt den Ablaufplan der Filterung bei Eintreffen der Antwort. Beim Eintreffen einer Antwort wird der gesamte Inhalt der Antwortet überprüft. Hierbei wird die gesamte Datei auf Schlagwörter überprüft. Eine Liste von Schlagwörter kann z. B. von anderen Diensten bezogen werden. Auch können sie manuell hinzugefügt werden. Sollten bestimmte Schlagwörter enthalten sein, so wird anhand einer Positivliste überprüft, ob von dieser IP-Adresse bzw. Domain Informationen bezogen werden dürfen, die das Schlagwort enthalten. Nach dieser Überprüfung wird die Dateigröße der Information ermittelt und mit der maximal zulässigen Dateigröße verglichen. Sollte auch dieses Kriterium erfüllt sein, so wird die Information zum Nutzer weitergeleitet.

Der Benutzer bestimmt die Regeln entweder durch einfach gestaltete Formulare, in denen er ein vordefiniertes Regelwerk auswählen kann, das individuell angepaßt werden kann, oder er sendet eine Email an einen entsprechenden Email-Server. Die in der Email definierten Regeln entsprechen einer bestimmten vorgegebenen Syntax. Der Email-Server verarbeitet diese Emails und trägt die Regeln in das entsprechende Filterprofil ein.

Die so durch die Regeln bestimmten Mengen können durch Mengenoperationen wie Vereinigung, Schnitt und Komplementärmenge miteinander verknüpft werden. Hierbei ist es nicht maßgeblich, ob die Regeln eine Antwortmenge oder eine Fragemenge bestimmt haben.

Eine integrierte Firewall, die in der Regel eine Kombination. aus Hardware und Software darstellt, dient zum Schutz des Nutzergerätes vor Angriffen aus dem Internet. Der gesamte Informationsaustausch wird ausschließlich über die Firewall geführt. Die Firewall arbeiteten dabei auf verschiedenen Ebenen.

Ein Packet-Filter analysiert die Informationen, die in Form. von Datenpaketen übertragen werden, auf der Netzwerkschicht.

Mit Hilfe eines Circuit-Relais werden alle Verbindung am Eingang der Firewall unterbrochen, um sie dann am Ausgang wieder aufzubauen, damit eine direkte Verbindung des Nutzergerätes mit dem Internet auf der Protokollebende verhindern wird.

Mit dem Application-Level-Gatway erfolgt ein Schutz auf der Anwendungsebenen. So wird für jede Anwendung ein Gateway-Dienst (Proxy-Dienst) integriert, über den das Nutzergerät mit der entsprechenden Anwendung in das Internet gelangt. Diese Gateway-Dienst gibt es z. B. für Web-Browser und FTP-Clients. Hierdurch hat nur der Proxy Zugang zum Internet das Nutzergeräte selber jedoch nicht.

Eine weitere Schutzmaßnahmen ist, das die IP-Adressen der Nutzergerätes durch den Firewall maskierte werden so daß nur die erfindungsgemäße Vorrichtung Verbindung mit dem Internet hat.

Der Informationsfilter 10 ist vorzugsweise als Hochleistungsrechner ausgebildet, wobei die Bearbeitungseinheit 22 aus einem oder mehreren Mikroprozessoren besteht. Das Eingabegeräte 20 und das Ausgabegerät 21 sind Netzwerkkarten bzw. Netzwerk-Adapter die eine Verbindung zu den entsprechenden Netzwerken bereitstellen. Die Funktionalität dieses Hochleistungsrechner wird vorzugsweise durch Software bestimmt.

Der Nutzerprofilspeicher 18 und der Cache-Speicher 25 sind Standardspeichermedien wie Festplatten oder RAM-Speicher. Es ist ebenfalls möglich, daß der Zugriff auf den Inhalt der Speicher über hoch performante Datenbanken erfolgt.

### Bezugszeichen

- 10: Informationsfilter
- 11: Proxy, bereits vorhanden
- 12: Modem-, ISDN-Pool
- 13: Vorrichtung zum Zuweisen von IP-Adressen
- 14: Wahlverbindungen
- 15: Nutzergeräte des Nutzers
- 16: Router
- 17: Netzwerk, Internet
- 18: Nutzerprofilspeicher
- 19: Filterprofil
- 20: Eingabegerät
- 21: Ausgabegerät
- 22: Bearbeitungseinheit
- 23: Nutzer
- 24: Provider
- 25: Cache-Speicher
- 26: NAS (Network Access System)

## Patentansprüche

1. Vorrichtung zum individuellen Filtern von über ein Netzwerk (17) übertragener Informationen, die an ein Nutzergerät (15) gerichtet sind,
- mit mindestens einem Nutzerprofilspeicher (18) , in dem nutzerspezifische Filterprofile (19) in Form eines Regelwerkes abgelegt sind, wobei die Regeln Zulassungsmengen und/oder Ausschlußmengen für Anfragen und/oder Antworten mit Hilfe einer Definitonssprache bestimmen, wobei diese Definitionssprache den Typ, die Größe, den Inhalt, die Art und/oder den Zeitpunkt der Informationen und/oder der Netzwerkadresse definieren, wobei diese Mengen und/oder die Elemente der Mengen vorzugsweise durch bekannte Mengen- und/oder logische Operatoren miteinander verknüpfbar sind und/oder durch reguläre Ausdrücke bestimmbar sind und/oder durch wenn-dann-sonst-Abfragen bestimmbar sind,
- mit mindestens einem Eingabegerät (20), das die zu filternden Informationen aus und/oder in das Netzwerk (17) empfängt,
- mit mindestens einem Ausgabegerät (21), das die gefilterten Informationen zum Nutzergerät (15) sendet,
- mit mindestens einer Bearbeitungseinheit (22), die eine Netzwerkadresse des Nutzergeräts (15) anhand der zumindest einmalig übertragenen Nutzeridentifikationsdaten dem nutzer-spezifischen Filterprofil (19) zuordnet und die im folgenden anhand des nutzerspezifischen Filterprofils (19) die Informationen aus dem Netzwerk (17), die unmittelbar oder mittelbar an die entsprechenden Netzwerkadresse adressiert sind oder von ihr stammen, nach dem Regelwerk des Filterprofils (19) vorzugsweise auf binärer Ebene filtere, wobei insbesondere der Inhalt, die Größe, die Art und/oder der Zeitpunkt und/oder die Adresse der Informationen auf der Basis der Ausschlussmengen und Zulassungsmengen, sowie ihrer Verknüpfungen überprüft wird.

2. Vorrichtung nach Anspruch 1, gekennzeichnet durch einen weiteren Informationsspeicher (25), der zum Cachen von Informationen aus dem Netzwerk (17) dient.

3. Vorrichtung nach einem oder mehreren der Ansprüche 1 oder 2, dadurch gekennzeichnet,
- daß das Netzwerk (17) das Internet ist und die Vorrichtung (10) zwischen dem Internet (17) und dem Nutzergerät (15) angeordnet ist, und
- das Eingabegerät (20) mit dem Internet (17) verbunden ist, um Informationen aus dem Internet (17) zu empfangen, und
- das Ausgabegerät (21), die gefilterten Ergebnisse aus dem Internet (17) an das Nutzergerät (15) übermittelt,
- daß die Bearbeitungseinheit (22) anhand übertragener Nutzeridentifikationsdaten ein nutzerspezifischen Filterprofil (19) der IP-Adresse des Nutzergeräts (15) zuordnet und die Bearbeitungseinheit (22) im folgenden anhand des Filterprofils (19) die Informationen aus dem Netzwerk (17), die unmittelbar oder mittelbar an die entsprechende IP-Adresse adressiert sind oder von ihr stammen, nach den Kriterien des Filterprofils (19) filtert.

4. Vorrichtung nach einem oder mehreren der Ansprüche 1 bis 3, gekennzeichnet durch die Funktionalität eines Internet-Proxys, der eine lokale Socket-Verbindung zum Nutzergerät (15) aufbaut, über die der Informationsaustausch mit dem Internet (17) erfolgt, wobei anhand der zumindest einmaligen übertragenen Nutzeridentifikationsdaten, die in Abhängigkeit zu der IP-Adresse des Nutzergerätes (15) stehen, die Bearbeitungseinheit '(22) das nutzerspezifische Filterprofil (19) der IP-Adresse zuordnet und im folgenden anhand des Filterprofils (19) die Anfragen des Nutzergeräts (15) und die Informationen aus dem Internet (17), die von dem entsprechenden Nutzergerät (15) angefordert wurden, nach den Kriterien des Filterprofils (19) filtert, um die gefilterten Informationen dann über die Socket-Verbindung zum Nutzergerät (15) zu übertragen.

5. Vorrichtung nach Anspruch 4, dadurch gekennzeichnet, daß bei einer vom Nutzergerät (15) angefragten Information im Cache-Speicher (25) nach der Information gesucht wird, um beim Fehlen dieser Information, die Anfrage an das Internet (17) weiterzuleiten, wobei nach der Ankunft oder dem Auffinden der Information diese nur dann über die Socket-Verbindung an das Nutzergerät (15) weitergeleitet wird, wenn das Filterprofil (19) dies erlaubt.

6. Vorrichtung nach Anspruch 1 bis 5, dadurch gekennzeichnet, daß die Regeln Wörter bestimmen, die in den Informationen enthalten sein dürfen oder nicht.

7. Vorrichtung nach einem oder mehreren der Ansprüche 1 bis 6 dadurch gekennzeichnet, daß die Regeln Domain-Namen bestimmen, von denen die Informationen bezogen werden dürfen oder nicht.

8. Vorrichtung nach einem oder mehreren der Ansprüche 1 bis 7, dadurch gekennzeichnet, daß die Regeln die Größe, die Art und/oder den Zeitpunkt zum dem auf die Information zugegriffen wird begrenzen.

9. Vorrichtung nach einem oder mehreren der Ansprüche 1 bis 8, dadurch gekennzeichnet, daß die Regeln nutzerspezifisch änderbar sind.

10. Vorrichtung nach einem oder mehreren der Ansprüche 1 bis 10, dadurch gekennzeichnet, daß eine Überprüfung der angeforderten Information auf Viren mit Hilfe von bekannten Erken-nungsverfahren erfolgt.

11. Vorrichtung nach einem oder mehren der Ansprüche 1 bis 10, gekennzeichnet durch die Funktionalität eines Firewalls, wobei
- das Eingabegerät (20) als Ein- und Ausgabegerät ausgebildet ist,
- das Ausgabegerät (21) als Ein- und Ausgabegerät ausgebildet ist, und
- die Vorrichtung (10) über die Ein- und Ausgabegeräte (20, 21) das Nutzergerät (15) physikalisch mit dem Internet (17) verbindet und eine direkte physikalische Verbindung mit dem Internet (17) für das Nutzergerät (15) nicht möglich ist.

12. Vorrichtung nach einem oder mehren der Ansprüche 1 bis 11, dadurch gekennzeichnet, daß statistische Informationen über das Anfrageverhalten zu jedem Nutzerprofil gespeichert werden.

13. Verfahren zum individuellen Filtern von über ein Netzwerk übertragener Informationen in Form von Anfragen und/oder Antworten, die an ein Nutzergerät gerichtet sind, mit individuellen Nutzerprofilen für ein Nutzergerät und/oder dessen Benutzer, wobei die Nutzerprofile durch ein Regelsystem bestimmt mit Hilfe einer Definitonssprache bestimmt sind, wobei diese Definitionssprache den Typ, die Größe, den Inhalt, die Art und/oder den Zeitpunkt der Informationen und/oder der Netzwerkadresse definieren, wobei diese Mengen und/oder die Elemente der Mengen vorzugsweise durch bekannte Mengen- und/oder logische Operatoren miteinander verknüpfbar sind und/oder durch reguläre Ausdrücke bestimmbar sind und/oder durch wenn-dann-sonst-Abfragen bestimmbar sind,
- in einem ersten Schritt eine Netzwerkadresse des Nutzergeräts dem Nutzerprofil anhand der zumindest einmalige übertragenen Nutzeridentifikationsdaten zugeordnet wird, und
- in einem weiteren Schritt die vom Nutzergerät angeforderten und gesendeten Informationen anhand der Netzwerkadresse unmittelbar oder mittelbar bestimmt werden und nach den im Nutzerprofil gespeicherten Kriterien vorzugsweise auf der binären Ebene gefiltert werden, wobei die Operatoren berücksichtigt werden.

14. Verfahren nach Anspruch 13, dadurch gekennzeichnet, daß beim Aufbau einer Verbindung zum Netzwerk durch ein Nutzergerät, die dem Nutzergerät zugewiesene Netzwerkadresse und die Nutzeridentifikationsdaten in Relation zu einander gespeichert werden und zur Auswahl des Nutzerprofils geladen werden können, wobei beim Aufbau der Verbindung überprüft wird, ob ein spezifisches Nutzerprofil vorhanden ist, um dieses, falls es vorhanden ist, zu aktivieren und eine Filterung der Informationen zu ermöglichen.

15. Verfahren nach einem oder mehreren der Ansprüche 13 und 14, dadurch gekennzeichnet, daß das Netzwerk das Internet ist, der Zugang zum Internet durch einen Network-Access-Server (NAS) erfolgt, der die Nutzeridentifikationsdaten in Relation mit der Netzwerkadresse speichert und einen Zugriff auf diese Informationen erlaubt.

16. Verfahren nach Anspruch 15, dadurch gekennzeichnet, daß der NAS aktiv die Nutzeridentifikationsdaten dann übermittelt, wenn sich ein neuer Nutzer angemeldet hat.

17. Verfahren nach Anspruch 16, dadurch gekennzeichnet, daß der NAS passiv die Nutzeridentifikationsdaten übermittelt, wenn eine Anfrage an ihn gestellt wird.

18. Verfahren nach einem oder mehreren der Ansprüche 13 bis 17, dadurch gekennzeichnet, daß eine lokale Netzwerkverbindung mit jedem Nutzergerät aufgebaut wird, über die Informationen in Form von Anfragen und Antworten übertragen werden, wobei die Netzwerkadressen der Nutzergeräte bei einer Anfrage auf eine Netzwerkadresse mit einer entsprechenden Maskierung abgebildet werden und ins Internet weitergeleitet werden, und wenn die Antworten eintreffen wieder rücktransformiert werden.

19. Verfahren nach einem oder mehreren der Ansprüche 13 bis 18, dadurch gekennzeichnet, daß die Antworten über einen längeren Zeitraum zwischengespeichert werden, um bei einer erneuten Anfrage eine kürzere Antwcrtzeit zu erlangen, indem die zwischengespeicherte Antworten übertragen werden.

20. Computersoftware, gekennzeichnet durch die Merkmale des Anspruchs 13 und keinem und/oder mehreren seiner Unteransprüche.
